# EUROPEAN PATENT APPLICATION

(11) **EP 4 694 119 A1**
(43) Date of publication of application: **11.02.2026**
(21) Application number: 24842305.5
(22) Date of filing: 12.07.2024
(51) Int. Cl.: H04N 19/134

(54) **IMAGE CODING/DECODING METHOD AND APPARATUS**

(30) Priority: 20.07.2023 CN 202310898245
(71) Applicant: Huawei Technologies Co., Ltd., Shenzhen, Guangdong 518129 (CN)
(72) Inventor: HU, Gong, Shenzhen, Guangdong 518129 (CN); LI, Yong, Shenzhen, Guangdong 518129 (CN); YU, Weihua, Shenzhen, Guangdong 518129 (CN)
(74) Representative: Eisenführ Speiser
(86) International application number: PCT/CN2024/105195
(87) International publication number: WO 2025/016312

(57) **Abstract**

An image encoding method and apparatus are disclosed, and relate to the field of video processing technologies. An encoding device classifies sub-images of a to-be-encoded image based on feature values of the sub-images. Different sub-images have different feature values, and after matching the sub-images with encoded sub-images in a buffered queue, a matched sub-image and an unmatched sub-image may be determined. Therefore, image encoding data of a sub-image that is in a previous frame of image and that is the same as the matched sub-image in the to-be-encoded image can be reused only when the matched sub-image in the to-be-encoded image and the sub-image in the previous frame of image do not need to have a same location and same content. Further, in a process of encoding the to-be-encoded image, encoding (for example, standard encoding) is performed on the unmatched sub-image, and information about the matched encoded sub-image is generated for the matched sub-image. This avoids a problem of repeated encoding of valid pixels in the matched sub-images, reduces bandwidth for video encoding, and improves encoding efficiency.

## Description

This application claims priority to Chinese Patent Application No. 202310898245.X, filed with the China National Intellectual Property Administration on July 20, 2023 and entitled "IMAGE CODING METHOD AND APPARATUS", which is incorporated herein by reference in its entirety.

### TECHNICAL FIELD

This application relates to the field of video processing technologies, and in particular, to an image coding method and apparatus.

### BACKGROUND

With development of big data (big data), artificial intelligence (artificial intelligence, AI), and cloud computing technologies, a large amount of data is continuously generated. To reduce data storage costs, a compression device may compress image data according to a hardware encoding algorithm, that is, reconstruct the image data according to a specific method, to reduce data redundancy and reduce storage space occupied by the image data.

In a video encoding process, the compression device compares a current frame of image with an adjacent previous frame of image, encodes image areas in the current frame that are different from those in the previous frame, and does not encode image areas with the same locations and same content as those in the previous frame. In other words, image encoding data that is in the adjacent previous frame and that has a same location and same content as those in the current frame is reused for the current frame. However, for scenarios such as a page scrolling scenario and a page flipping scenario that frequently occur in desktop scenarios, video encoding is bandwidth-intensive and inefficient.

### SUMMARY

This application provides an image coding method and apparatus, to resolve a problem that video encoding is bandwidth-intensive and inefficient in desktop scenarios.

According to a first aspect, this application provides an image encoding method. The image encoding method is applied to a coding system, and the image encoding method is performed by an encoding device included in the coding system. The image encoding method includes: The encoding device obtains a to-be-encoded first image and partitions the first image into a plurality of sub-images, and the encoding device matches the plurality of sub-images with a buffered queue, to determine a first type of sub-images and a second type of sub-images. The queue includes feature values of one or more encoded sub-images, an image to which the one or more encoded sub-images belong and the first image belong to a same stream, feature values of the first type of sub-images match a feature value of an encoded sub-image in the queue, and feature values of the second type of sub-images are not recorded in the queue. In addition, the encoding device generates first information of the first type of sub-images, encodes the second type of sub-images to obtain second information, and outputs encoded data of the first image. The first information indicates an encoded sub-image that matches the first type of sub-images in the queue, and the output encoded data includes the first information and the second information.

Compared with a case in which image encoding data that is in an adjacent previous frame and that has a same location and same content as those in a current frame is reused for the current frame, in this application, the encoding device classifies sub-images of a to-be-encoded image based on feature values of the sub-images. Different sub-images have different feature values, and after matching the sub-images with encoded sub-images in a buffered queue, matched sub-images (for example, the first type of sub-images) and unmatched sub-images (for example, the second type of sub-images) may be determined. Therefore, image encoding data of a sub-image that is in a previous frame of image and that is the same as a matched sub-image in the to-be-encoded image can be reused only when the matched sub-image in the to-be-encoded image and the sub-image in the previous frame of image do not need to have a same location and same content. Further, in the process of encoding the to-be-encoded image, encoding (for example, standard encoding) is performed on the unmatched sub-images, and information (the first information) about the matched encoded sub-images is generated for the matched sub-images. This avoids a problem of repeated encoding of valid pixels in a matched sub-image, reduces bandwidth for video encoding, and improves encoding efficiency.

With reference to the image encoding method provided in the first aspect, in an optional implementation, the feature value that is of the encoded sub-image and that is stored in the queue may include any one or a combination of: an image size, a location, an identification, and a matching status of the encoded sub-image, and the matching status indicates whether the encoded sub-image matches a to-be-encoded sub-image.

In an optional implementation, the identification of the encoded sub-image is a part of original pixel values of the encoded sub-image or a value obtained through processing the part of the original pixel values in a reference manner. The reference manner includes at least one of a hash algorithm and a cyclic redundancy check algorithm.

In this application, the encoding device stores the feature values (for example, the foregoing image sizes, locations, identifications, and matching statuses) of the encoded sub-images into an independent queue, and distinguishes the sub-images of the to-be-encoded image based on related information stored in the queue. In this way, the encoding device can reuse image encoding data of sub-images in a plurality of previous frames of images. This reduces a repeated encoding process of valid pixels in sub-images with same content, and helps reduce bandwidth for video encoding and improve encoding efficiency. In addition, image encoding data of a complete encoded sub-image does not need to be stored in the queue, that is, when initial encoding data of the encoded sub-image is stored in a bitstream obtained through encoding, in comparison with image encoding data obtained by repeatedly encoding sub-images with same content, a small amount of data is occupied by the queue, and the encoding device needs to provide only small storage space to implement a related function of the queue. This helps reduce bandwidth for video encoding and improve encoding efficiency.

With reference to the image encoding method provided in the first aspect, in an optional implementation, that the encoding device generates the first information of the first type of sub-images includes: The encoding device obtains feature values of the first type of sub-images, fills the first type of sub-images with a reference pixel, and encodes a filled first type of sub-images to obtain first data. The encoding device obtains the first information based on the first data and the feature values of the first type of sub-images. For example, the reference pixel may be a preset fixed pixel value, and encoding bandwidth occupied by the fixed pixel value is small. For example, all pixels in the filled first type of sub-images are the same, or pixels in the filled first type of sub-images comply with a specific rule, and according to the specific rule, an amount of encoded data is small. Further, an amount of data output by the encoding device after encoding a video in which the to-be-encoded image is located is reduced, and bandwidth for video encoding is reduced. This helps improve encoding efficiency and reduce bandwidth occupied for data transmission.

In an optional implementation, the first information includes the feature values of the first type of sub-images and second data obtained by encoding the first type of sub-images at a first bit rate. The first bit rate is less than or equal to a bit rate threshold. The encoding device encodes the matched sub-images (the first type of sub-images) at a low bit rate, so that an amount of encoded data of a part of image areas is small. This reduces bandwidth for video encoding and improves encoding efficiency.

With reference to the image encoding method provided in the first aspect, in an optional implementation, after the encoding device determines the first type of sub-images and the second type of sub-images, the image encoding method provided in this application further includes: The encoding device generates a feature value of each sub-image of the second type of sub-images, and writes the feature value of each sub-image of the second type of sub-images into the queue. It should be noted that the encoding device writes feature values of unmatched sub-images that are encoded for the first time into the queue, and when a next frame of image of the image in the video also has another sub-image that has same content as the unmatched sub-images, image encoding data of a sub-image whose feature value has been added to the queue may be reused in the another sub-image. This reduces encoding bandwidth of a plurality of frames of images in the video, and improves encoding efficiency.

With reference to the image encoding method provided in the first aspect, in an optional implementation, the plurality of sub-images are consistent in image size. Different frames of images in the video are partitioned in a same manner, so that each encoded sub-image and the to-be-encoded sub-image only need to be compared based on a feature value, and then image encoding data of encoded sub-images with a same feature value is reused. This helps reduce bandwidth for video encoding and improve encoding efficiency.

With reference to the image encoding method provided in the first aspect, in an optional implementation, that the encoding device partitions the first image into the plurality of sub-images includes: The encoding device obtains a plurality of image features of the first image, and selects at least one partitioning manner from a plurality of preset partitioning manners based on the plurality of image features. At least one image feature described above is used to describe image texture information of the first image, and the at least one partitioning manner matches the image texture information. In addition, the encoding device partitions the first image in the at least one partitioning manner, to obtain the plurality of sub-images. The encoding device adaptively selects different partitioning manners for different frames of images based on image texture information of the different frames of images, so that each sub-image obtained through partitioning matches an image texture. This helps improve encoding effect of image content included in the sub-image, and further improve image encoding accuracy. In addition, when same content repeatedly appears in different frames of images of a video, because image content matches an image texture, a to-be-encoded sub-image can more easily match a feature value of an encoded sub-image, and image encoding data of the encoded sub-image is further reused. Therefore, bandwidth for video encoding is reduced and encoding efficiency of video encoding is improved.

With reference to the image encoding method provided in the first aspect, in an optional implementation, that the encoding device outputs the encoded data of the first image includes: The encoding device sends the encoded data of the first image. For example, the encoding device may store the encoded data of the first image in a memory of the coding system, or send the encoded data of the first image to a decoding device, so that the decoding device reconstructs and restores the image based on the encoded data.

With reference to the image encoding method provided in the first aspect, in an optional implementation, the image encoding method provided in this application further includes: The encoding device sends data stored in the queue, where the data stored in the queue is carried in a bitstream parameter set, a transport protocol header, and a real-time transport protocol (real-time transport protocol, RTP) payload, or a file format. In a data communication process, in addition to transmitting encoded data obtained through encoding (for example, a bitstream), the encoding device further transmits data stored in an introduced queue, so that the decoding device can quickly reconstruct and restore an image based on the data stored in the queue. This improves decoding efficiency. In addition, because an amount of the data stored in the queue is small, the data may be carried in one of the foregoing several optional manners, so that bandwidth required for communication between the encoding device and the decoding device is reduced. This helps improve communication efficiency of the coding system, and reduce bandwidth consumption.

According to a second aspect, this application provides an image decoding method. The image encoding method is applied to a coding system, and the image encoding method is performed by a decoding device included in the coding system. The image decoding method includes: The decoding device obtains a bitstream, and decodes the bitstream based on encoded data in the bitstream to obtain a first image, where the bitstream includes encoded data of at least one frame of image and data stored in a queue used for image encoding. In addition, the decoding device matches the data stored in the queue in the bitstream with the first image, and after determining a first type of sub-images and a second type of sub-images in the first image, restores, based on feature values that are in the queue and that match the first type of sub-images, image areas corresponding to the first type of sub-images in the first image to obtain a reconstructed image. The queue includes feature values of one or more decoded sub-images, an image to which the one or more decoded sub-images belong and the first image belong to a same stream, the first type of sub-images match the feature value of the decoded sub-image in the queue, and no feature value of the second type of sub-images is recorded in the queue.

Compared with a case in which image decoding data that is in an adjacent previous frame and that has a same location and same content as those in a current frame is reused for the current frame, in this application, the decoding device classifies sub-images of a first image based on feature values of the sub-images. Different sub-images have different feature values, and after matching the sub-images with decoded sub-images in a buffered queue, matched sub-images (for example, the first type of sub-images) and unmatched sub-images (for example, the second type of sub-images) may be determined. Therefore, image decoding data of a sub-image that is in a previous frame of image and that is the same as a matched sub-image in the to-be-decoded image can be reused only when the matched sub-image in the first image and the sub-image in the previous frame of image do not need to have a same location and same content. Further, in the decoding process of the first image, decoding (for example, standard decoding) is performed on the unmatched sub-images, and information about matched decoded sub-images is reused for the matched sub-images. In this way, repeated decoding of valid pixels in the matched sub-images is avoided, decoding bandwidth for video decoding is reduced, and decoding efficiency is improved.

With reference to the image decoding method provided in the second aspect, in an optional implementation, the feature value of the decoded sub-image includes any one or a combination of: an image size, a location, an identification, and a matching status of the decoded sub-image, and the matching status indicates whether the decoded sub-image matches a to-be-decoded sub-image.

With reference to the image decoding method provided in the second aspect, in an optional implementation, the identification of the decoded sub-image is a part of original pixel values of the decoded sub-image or a value obtained through processing the part of the original pixel values in a reference manner, and the reference manner includes at least one of a hash algorithm and a cyclic redundancy check algorithm.

With reference to the image decoding method provided in the second aspect, in an optional implementation, a plurality of sub-images are consistent in image size.

With reference to the image decoding method provided in the second aspect, in an optional implementation, the data stored in the queue is carried in a bitstream parameter set, a transport protocol header, a real-time transport protocol RTP payload, or a file format.

According to a third aspect, this application provides a coding apparatus. The coding apparatus includes modules configured to perform the method according to any one of the first aspect or the possible designs of the first aspect, and modules configured to perform the method according to any one of the second aspect or the possible designs of the second aspect.

According to a fourth aspect, this application provides an encoding device. The encoding device includes at least one processor and a memory. The memory is configured to store a computer program, so that when the computer program is executed by the at least one processor, the method according to any one of the first aspect or the possible designs of the first aspect is implemented.

According to a fifth aspect, this application provides a decoding device. The decoding device includes at least one processor and a memory. The memory is configured to store a computer program, so that when the computer program is executed by the at least one processor, the method according to any one of the second aspect or the possible designs of the second aspect is implemented.

According to a sixth aspect, this application provides a coding system. The coding system includes the encoding device according to the fourth aspect and the decoding device according to the fifth aspect.

According to a seventh aspect, this application provides a chip. The chip includes a processor and a power supply circuit. The power supply circuit is configured to supply power to the processor. The processor is configured to: perform operation steps of the method according to any one of the first aspect or the possible implementations of the first aspect, and perform operation steps of the method according to any one of the second aspect or the possible implementations of the second aspect.

According to an eighth aspect, this application provides a computer-readable storage medium. The computer-readable storage medium includes computer software instructions. When the computer software instructions are run on a computer, the computer is enabled to: perform operation steps of the method according to any one of the first aspect or the possible implementations of the first aspect, and perform operation steps of the method according to any one of the second aspect or the possible implementations of the second aspect. For example, the computer is the foregoing encoding device or decoding device.

According to a ninth aspect, this application provides a computer program product. When the computer program product runs on a computer, the computing device is enabled to: perform operation steps of the method according to any one of the first aspect or the possible implementations of the first aspect, and perform operation steps of the method according to any one of the second aspect or the possible implementations of the second aspect. For example, the computer is the foregoing encoding device or decoding device.

For beneficial effect of the third aspect to the ninth aspect, refer to the descriptions of any implementation of the first aspect or the second aspect. Details are not described herein again. In this application, on the basis of the implementations according to the foregoing aspects, the implementations may be further combined to provide more implementations.

### BRIEF DESCRIPTION OF DRAWINGS

FIG. 1 is a diagram of a video transmission system according to this application;
FIG. 2 is a diagram of a video coding system according to this application;
FIG. 3 is a schematic flowchart 1 of an image encoding method according to this application;
FIG. 4 is a schematic flowchart 2 of an image encoding method according to this application;
FIG. 5 is a schematic flowchart 3 of an image encoding method according to this application;
FIG. 6 is a schematic flowchart of an image coding method according to this application;
FIG. 7 is a diagram of an image coding method in a fixed block partitioning manner according to this application;
FIG. 8 is a diagram of an image coding method in an adaptive partitioning manner according to this application;
FIG. 9 is a diagram of a structure of a coding apparatus according to this application; and
FIG. 10 is a diagram of a structure of an image processing system according to this application.

### DESCRIPTION OF EMBODIMENTS

Technical solutions in this application may be used in combination with a video coding standard (for example, standards such as H.264 and HEVC), and may also be used in combination with a future video coding standard (for example, the H.266 standard). Terms used in embodiments of this application are only used to explain specific embodiments of this application, but are not intended to limit this application. The following first briefly describes some concepts that may be used in this application.

A video includes a plurality of consecutive images. According to the theory "persistence of vision", human eyes cannot differentiate single static images when the plurality of consecutive images change at more than 24 frames (frames) per second. In this case, the plurality of images that seem to be smooth and consecutive are the video.

Video coding indicates processing of a sequence of images that form a video or a video sequence. In the field of video coding, terms "picture (picture)", "frame (frame)", or "image (image)" may be used as synonyms. Video coding used in this specification indicates video encoding or video decoding. Video encoding is performed at a source side, and typically includes processing (for example, compressing), under a condition that specific image quality is met, an original video picture to reduce an amount of data required for representing the video picture, for more efficient storage and/or transmission. Video decoding is performed at a destination side, and typically includes inverse processing relative to an encoder, to reconstruct a video picture. "Coding" of a video picture in embodiments should be understood as "encoding" or "decoding" of a video sequence. A combination of an encoding part and a decoding part is also referred to as coding (encoding and decoding). Video coding may also be referred to as image coding (image coding) or image compression (image compression). Image decoding (image decoding) is an inverse process of image encoding.

A video sequence includes a series of images (pictures), an image is further partitioned into slices (slices), and a slice is further partitioned into blocks (blocks). Video coding is performed by block. In some new video coding standards, a concept "block" is further extended. For example, a macroblock (macroblock, MB) is introduced in the H.264 standard. The macroblock may be further partitioned into a plurality of prediction blocks (partition) for predictive coding. In the high efficiency video coding (high efficiency video coding, HEVC) standard, a plurality of block units are functionally partitioned by using basic concepts such as a coding unit (coding unit, CU), a prediction unit (prediction unit, PU), and a transform unit (transform unit, TU), and are described by using a new tree-based structure. For example, a CU may be partitioned into smaller CUs based on a quad-tree, and a smaller CU may continue to be partitioned to generate a quad-tree structure. The CU is a basic unit for partitioning and coding a to-be-coded image. A PU and a TU also have a similar tree structure. The PU may correspond to a prediction block and is a basic unit of predictive coding. The CU is further partitioned into a plurality of PUs in a partitioning manner. The TU may correspond to a transform block, and is a basic unit for transforming a prediction residual. However, all the CU, the PU, and the TU essentially belong to the concept of block (or referred to as coding units).

For example, in HEVC, a CTU is partitioned into a plurality of CUs by using a quad-tree structure represented as a coding tree. A decision on whether to code a picture area using inter-picture (temporal) or intra-picture (spatial) prediction is made at a CU level. Each CU may be further partitioned into one, two, or four PUs based on a PU partitioning type. Inside one PU, a same prediction process is applied, and related information is transmitted to a decoder on a PU basis. After a residual block is obtained by applying the prediction process based on the PU partitioning type, the CU may be partitioned into transform units (transform units, TUs) based on another quad-tree structure similar to the coding tree used for the CU. In the recent development of video compression technologies, a quad-tree plus binary tree (Quad-tree and binary tree, QTBT) partition frame is used for partitioning a coding block. In a QTBT block structure, a CU may have a square or rectangular shape.

Lossless video coding means that an original video picture may be reconstructed. In other words, a reconstructed video picture has same quality as the original video picture (assuming that no transmission loss or other data loss occurs during storage or transmission).

Lossy video coding means that further compression is performed through, for example, quantization, to reduce a number of bits required for representing a video picture, and the video picture cannot be completely reconstructed at a decoder side. In other words, quality of a reconstructed video picture is lower or worse than that of the original video picture.

A bitstream is a binary stream generated through encoding an image or a video. The bitstream is also referred to as a bitstream.

Bit rate: The video bit rate is an amount of data compressed per unit time during video encoding, or an amount of data transmitted per unit time during transmission. Generally, when a same video source is encoded, a higher bit rate used in encoding indicates higher image quality, and a lower bit rate indicates lower image quality.

Bit rate control is a function of adjusting a bit rate during coding, and is abbreviated as rate control below. A bit rate control mode includes a constant bit rate (Constant Bit Rate, CBR) and a variable bit rate (Variable Bit Rate, VBR). The constant bit rate indicates that a bit rate is stable within bit rate statistical time. The variable bit rate indicates that a bit rate can fluctuate within bit rate statistical time to ensure stable quality of encoded images.

Quantization is a process of mapping consecutive values of a signal into a plurality of discrete amplitudes.

A quantization parameter (quantization parameter, QP) is used to: in an encoding process, quantize a residual value generated through a prediction operation or a coefficient generated through a transform operation; and in a decoding process, dequantize a syntax element, to obtain a residual value or a coefficient. The quantization parameter is a parameter used in a quantization process. Generally, a larger value of the quantization parameter indicates a more obvious quantization degree, poorer quality of a reconstructed image, and a lower bit rate. On the contrary, a smaller value of the quantization parameter indicates better quality of the reconstructed image and a higher bit rate.

I-frame (Intra frame, IDR frame): In the field of video coding, a frame in which all blocks are encoded through intra-frame prediction, allowing it to be decoded independently without relying on another frame, and that is marked as a frame of an I-frame type in a bitstream is generally referred to as an "I-frame."

Predictive frame (predictive-frame, P-frame): In the field of video coding, a frame that needs to be coded with reference to a previous frame and that is marked as a frame of a P-frame type in a bitstream is generally referred to as a "P-frame."

Bi-directional interpolated prediction frame (bi-directional interpolated prediction frame, B-frame): In the field of video coding, a frame that needs to be coded with reference to a previous frame and a next frame and that is marked as a frame of a B-frame type in a bitstream is generally referred to as a "B-frame."

In the coding field, the I-frame, the P-frame, and the B-frame may be collectively referred to as an IPB frame.

Reference frame: A frame that needs to be referenced during predictive coding of an IPB frame is a reference frame of the IPB frame.

Reconstructed frame: A video frame generated by an encoder through a complete encoding process is a reconstructed frame, and is usually used as a reference frame of a subsequent frame. The reconstructed frame of the encoder is equivalent to a frame generated after a decoder performs decoding.

Parameter set: The parameter set includes global information of a corresponding encoded image. A video parameter set (Video Parameter Set, VPS) includes video rating information, which facilitates extension of a compatible standard in scalable video coding or multi-view video coding. A sequence parameter set (Sequence Parameter Set, SPS) includes parameters for a continuously coded video sequence. A picture parameter set (Picture Parameter Set, PPS) corresponds to one or more images in a sequence.

The following describes implementations of an image coding method according to this application with reference to the accompanying drawings.

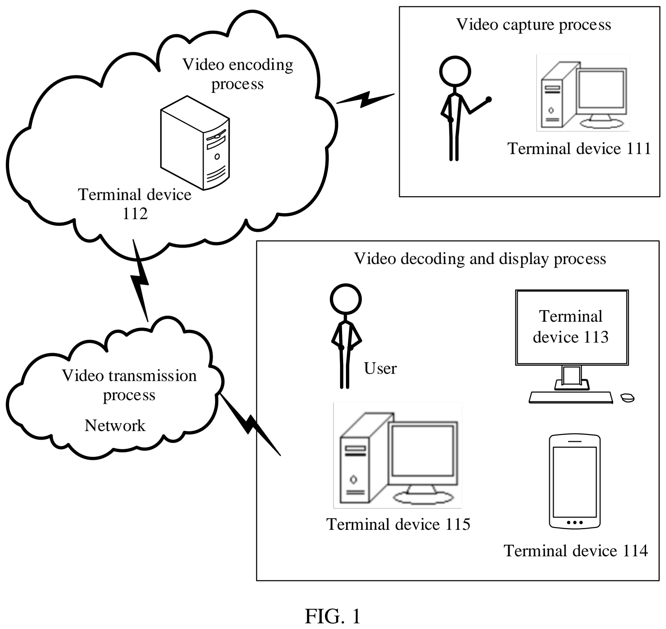

FIG. 1 is a diagram of a video transmission system according to this application. A video processing process includes video capture, video encoding, video transmission, and video decoding and display processes. The video transmission system includes a plurality of terminal devices (such as a terminal device 111 to a terminal device 115 shown in FIG. 1) and a network. The network may implement a video transmission function. The network may include one or more network devices. The network device may be a router, a switch, or the like.

The terminal device shown in FIG. 1 may be, but is not limited to, user equipment (user equipment, UE), a mobile station (mobile station, MS), a mobile terminal (mobile terminal, MT), and the like. The terminal device may be a mobile phone (for example, the terminal device 114 shown in FIG. 1), a tablet computer, a computer with a wireless transceiver function (for example, the terminal device 115 shown in FIG. 1), a virtual reality (Virtual Reality, VR) terminal device (for example, the terminal device 113 shown in FIG. 1), an augmented reality (Augmented Reality, AR) terminal device, a wireless terminal in industrial control (industrial control), a wireless terminal in self driving (self driving), a wireless terminal in a smart city (smart city), a wireless terminal in a smart home (smart home), or the like.

As shown in FIG. 1, in different video processing processes, terminal devices are different.

For example, in the video capture process, the terminal device 111 may be a camera apparatus configured to record screen or desktop content, for example, a mobile phone, a tablet computer, a personal computer, or the like that has a video recording function.

For another example, in the video encoding process, the terminal device 112 may be a server, or may be a data center. The data center may include one or more physical devices having an encoding function, for example, a server, a mobile phone, a tablet computer, or another encoding device.

For another example, in the video decoding and display process, the terminal device 113 may be an all-in-one computer, and a user may control a displayed image range through steering. The terminal device 114 may be a mobile phone, and the user may control, by using a touch operation, a mid-air operation, or the like, an image range displayed on the mobile phone 114. The terminal device 115 may be a personal computer, and the user may control, through an input device like a mouse or a keyboard, an image range displayed on a display screen.

It may be understood that a video is a general term, and the video is an image sequence including a plurality of consecutive frames, and one frame corresponds to one image.

FIG. 1 is merely a diagram. The video transmission system may further include another device that is not shown in FIG. 1. A quantity and types of terminal devices included in the system are not limited in embodiments of this application.

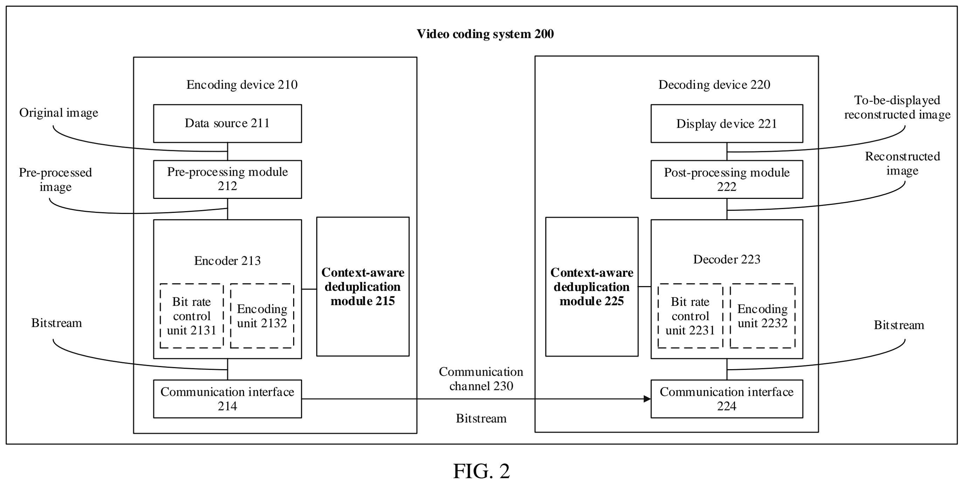

Based on the video transmission system shown in FIG. 1, FIG. 2 is a diagram of a video coding system according to this application. The video coding system 200 includes an encoding device 210 and a decoding device 220. The encoding device 210 establishes a communication connection to the decoding device 220 through a communication channel 230.

The encoding device 210 may implement a video encoding function. As shown in FIG. 1, the encoding device 210 may be the terminal device 112, or the encoding device 210 may be a data center having a video encoding capability. For example, the data center includes a plurality of servers.

The encoding device 210 may include a data source 211, a pre-processing module 212, an encoder 213, a communication interface 214, and a context-aware deduplication module 215.

The data source 211 may include or may be any type of electronic device configured to collect a video, and/or any type of source video generation device, for example, a computer graphics processor configured to generate a computer animation scene or any type of device configured to obtain and/or provide a source video, and a computer-generated source video. The data source 211 may be any type of internal memory or memory that stores the source video. The source video may include a plurality of video streams or images captured by a plurality of video capture apparatuses (like cameras).

An image may be considered as a two-dimensional array or matrix of pixels (picture elements). A pixel in the array may also be referred to as a sample. A quantity of samples in horizontal and vertical directions (or axes) of the array or the image defines a size and/or resolution of the image. For representation of a color, three color components are usually used. To be specific, the image may be represented as or include three sample arrays. For example, in an RBG format or color space, an image includes corresponding red, green, and blue sample arrays. However, in video coding, each pixel is usually represented in a luminance/chrominance format or color space. For example, an image in a YUV format includes a luminance component indicated by Y (sometimes indicated by L) and two chrominance components indicated by U and V. The luminance (luma) component Y represents luma or gray level intensity (for example, both are the same in a gray-scale image), while the two chrominance (chroma) components U and V represent chroma or color information components. Correspondingly, the image in the YUV format includes a luminance sample array of luminance sample values (Y) and two chrominance sample arrays of chrominance values (U and V). An image in an RGB format may be transformed or converted into a YUV format and vice versa. This process is also referred to as color conversion or transformation. If an image is monochrome, the image may include only a luminance sample array. In this application, an image transmitted by the data source 211 to the encoder 213 may also be referred to as original image data or a source image.

The pre-processing module 212 is configured to receive a source video, and pre-process the source video to obtain a pre-processed image, for example, a panoramic video or a plurality of frames of images. For example, pre-processing performed by the pre-processing module 212 may include color format conversion (for example, conversion from RGB to YCbCr), octree structuring, and video stitching.

The encoder 213 is configured to receive a pre-processed image, and encode the pre-processed image to obtain encoded data (for example, a bitstream). For example, the encoder 213 may include a bit rate control unit 2131 and an encoding unit 2132. The bit rate control unit 2131 is configured to determine a quantization parameter for encoding each coding unit in a current frame, so that the encoding unit 2132 performs prediction, quantization, and encoding on the pre-processed image based on the quantization parameter, to obtain the bitstream. For example, the encoder 213 matches a feature value of a sub-image with a feature value of an encoded sub-image stored in a queue, and generates instruction information of the sub-image when the feature values are the same. The instruction information indicates image encoding data of the encoded sub-image.

The communication interface 214 of the encoding device 210 may be configured to receive a bitstream and send the bitstream (or any other processed version of the bitstream) to another device like the decoding device 220, or any other device through the communication channel 230 for storage, display, direct reconstruction of an original image, or the like.

The context-aware deduplication module 215 is configured to: identify and match a sub-image that is in a to-be-encoded image and that has same content as an encoded sub-image, generate image instruction information (or referred to as a feature value) for the matched sub-image, and pack the image instruction information and low-bit-rate encoded data of the matched sub-image for transmission to the communication interface 214.

Optionally, the encoding device 210 includes a storage area. The storage area is configured to store the foregoing queue, and the queue stores feature values of one or more encoded sub-images.

The decoding device 220 may implement a function of image decoding or video decoding. As shown in FIG. 1, the decoding device 220 may be any one of the terminal device 113 to the terminal device 115 shown in FIG. 1.

The decoding device 220 may include a display device 221, a post-processing module 222, a decoder 223, a communication interface 224, and a context-aware deduplication module 225.

The communication interface 224 in the decoding device 220 is configured to receive a bitstream (or any other processed version of the bitstream) from the encoding device 210 or from any other encoding device like a storage device.

The communication interface 214 and the communication interface 224 may be configured to send or receive the bitstream through a direct communication link between the encoding device 210 and the decoding device 220, for example, through a direct wired or wireless connection, or via any type of network like a wired or wireless network or any combination thereof, or any type of private and public network, or any type of combination thereof.

The communication interface 224 corresponds to the communication interface 214, and may be configured to, for example, receive transmitted data, and process the transmitted data through any type of corresponding transmission decoding or processing and/or decapsulation to obtain a bitstream.

The communication interface 224 and the communication interface 214 each may be configured as a unidirectional communication interface indicated by an arrow, in FIG. 2, that corresponds to the communication channel 230 and that is directed from the encoding device 210 to the decoding device 220, or a bidirectional communication interface, and may be configured to: send and receive a message or the like to establish a connection, and determine and exchange any other information related to a communication link or data transmission like transmission of encoded compressed data (for example, a bitstream), and the like.

The decoder 223 is configured to receive the encoded data, and decode the encoded data to obtain decoded data (an image, a video, or the like). For example, the decoder 223 performs entropy decoding, dequantization, and prediction and reconstruction on the bitstream to obtain a reconstructed image. The decoder 223 may include a bit rate control unit 2231 and a decoding unit 2232. The bit rate control unit 2231 is configured to determine a quantization parameter for decoding each coding unit in a current frame, so that the decoding unit 2232 decodes, dequantizes, and predicts and reconstructs the bitstream based on the quantization parameter, to obtain the reconstructed image. The decoder 223 may determine a target quantity of bits of the coding unit based on image content of the coding unit, a quantity of lossy bits, and buffer fullness of a bitstream buffer, and decode the bitstream of the coding unit based on the quantization parameter determined based on the target quantity of bits.

The context-aware deduplication module 225 is configured to identify and match a sub-image that is in a to-be-reconstructed image and that has same content as a decoded sub-image, fill, based on image instruction information (or referred to as a feature value) of the matched sub-image, the decoded sub-image indicated by the image instruction information into a corresponding location of the matched sub-image in the to-be-reconstructed image, and transmit the to-be-reconstructed image to the post-processing module 222. On an encoder side, the context-aware deduplication module is also referred to as a context-aware deduplication coding (Context-Aware Deduplication Coding, CADC) module. On a decoder side, the context-aware deduplication module is also referred to as a context-aware deduplication decoding (Context-Aware Deduplication Decoding) module.

The post-processing module 222 is configured to perform post-processing on the decoded data obtained through decoding to obtain post-processed data (for example, a to-be-displayed reconstructed image). Post-processing performed by the post-processing module 222 may include, for example, color format conversion (for example, from YCbCr to RGB), octree reconstruction, video splitting and fusion, or any other processing for generating data for display, for example, by the display device 221.

The display device 221 is configured to receive the post-processed data for display to a user, a viewer, or the like. The display device 221 may be or include any type of display for representing the reconstructed image, for example, an integrated or external display screen or display. For example, the display screen may include a liquid crystal display (liquid crystal display, LCD), an organic light-emitting diode (organic light-emitting diode, OLED) display, a plasma display, a projector, a micro LED display, a liquid crystal on silicon (liquid crystal on silicon, LCoS), a digital light processor (digital light processor, DLP), or any type of other display screen.

In an optional implementation, the encoding device 210 and the decoding device 220 may transmit the encoded data via a data forwarding device. For example, the data forwarding device may be a router or a switch.

A function of the foregoing context-aware deduplication module is to reuse data of an encoded sub-image or a decoded sub-image, to reduce an amount of processing that needs to be performed by an encoder or a decoder, and improve processing efficiency of coding process. A name of the context-aware deduplication module is not limited in this application.

The structure of the foregoing coding system is merely an example for description. In some possible implementations, the coding system may further include another device. For example, the coding system may further include a terminal-side device or a cloud-side device. After obtaining an original image, a capture device (for example, the terminal device 111 in FIG. 1) pre-processes the original image to obtain a pre-processed image, and transmits the pre-processed image to a terminal-side device or the cloud-side device (for example, the terminal device 112 in FIG. 1), and the terminal-side device or the cloud-side device implements a function of encoding or decoding the pre-processed image.

It should be noted that, at the beginning of design, a standard video encoder mainly compresses natural videos captured by a camera lens, and has obvious disadvantages in some specific application scenarios (such as a screen content sharing scenario). Although a screen content coding (screen content coding, SCC) tool is introduced into the standard encoder later, the SCC tool is implemented only by software, which has a bottleneck in overheads and has high energy consumption. For example, in a desktop sharing scenario of real-time video communication (Real-time communication, RTC), a standard hardware video encoder is usually used due to a specification and a delay requirement. However, the standard video encoder does not include a screen content coding tool like an SCC tool. As a result, in this scenario, a compression rate is not high and bandwidth overheads are high. Therefore, the solutions provided in this application may be used to resolve problems of a large encoding bandwidth and a low compression rate of a standard video encoder in a screen content scenario.

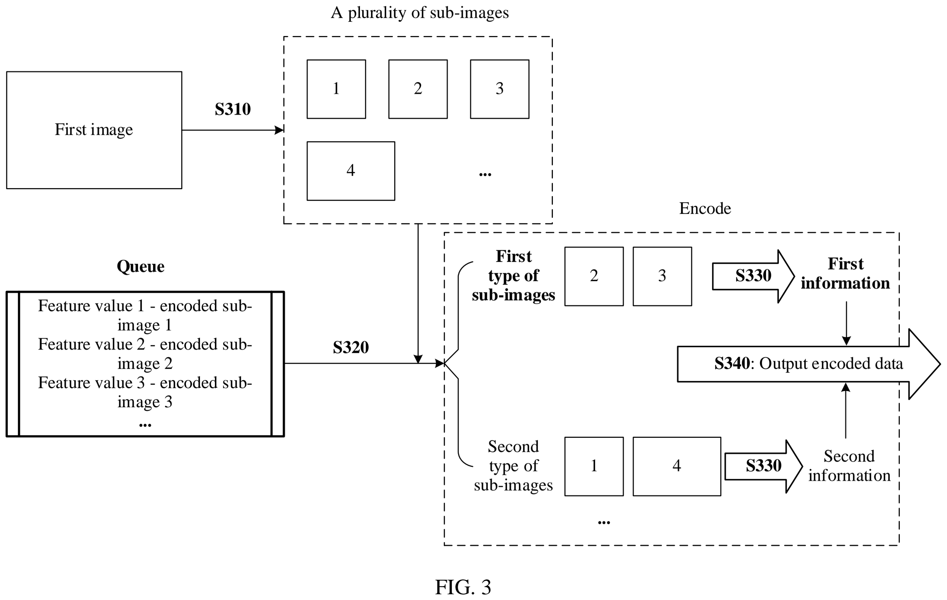

The image coding method provided in this application is applied to an encoding device and a decoding device. With reference to the accompanying drawings, the following first describes an image encoding method according to this application. FIG. 3 is a schematic flowchart 1 of an image encoding method according to this application. The image encoding method is performed by an encoding device 310. The encoding device 310 may be the encoding device 210 in FIG. 2, or the encoding device 310 may be the encoder 213 in FIG. 2. The image encoding method according to this embodiment includes the following step S310 to step S340.

S310: The encoding device 310 obtains a to-be-encoded first image, and partitions the first image into a plurality of sub-images.

The first image may be any frame of image in a to-be-transmitted video, and the video may be generated in a desktop sharing scenario.

In an optional implementation, a partitioning manner of the first image is performing block partitioning (fixed block partitioning) on an image of a fixed size, that is, the plurality of sub-images are consistent in image size. For example, a preset block partitioning manner includes but is not limited to partitioning into a fixed-size rectangle, a fixed-size triangle, or the like. An identification of each sub-image obtained through block partitioning is calculated according to a preset rule. The preset rule includes but is not limited to pixel value calculation, feature calculation, and the like.

For example, in this embodiment, a size of the sub-image obtained through block partitioning may be an enumeration of several fixed shape types, or may be a variable value of a length, a width, a height, or the like, or may be a sub-image size determined by using a method that can be used to obtain a size, for example, by specifying a rule for calculating a size (for example, a difference between lengths, widths, or heights of the sub-image obtained through block partitioning and a previous sub-image).

In this embodiment, different frames of images in a video are partitioned in a same manner, so that each encoded sub-image and a to-be-encoded sub-image only need to be compared based on a feature value, and then image encoding data of encoded sub-images with a same feature value is reused. This helps reduce bandwidth for video encoding and improve encoding efficiency.

In another optional implementation, a partitioning manner of the first image is performing adaptive block partitioning (adaptive partitioning or dynamic partitioning) based on different image content. For example, the encoding device obtains a plurality of image features of the first image, and selects at least one partitioning manner from a plurality of preset partitioning manners based on the plurality of image features. At least one image feature is used to describe image texture information of the first image, and the selected at least one partitioning manner matches the image texture information. In addition, the encoding device partitions the first image in the selected at least one partitioning manner, to obtain the plurality of sub-images.

For example, the preset partitioning manner (block partitioning manner) includes but is not limited to a manner like a manner of partitioning into a rectangle or triangle with a variable size. An identification of each sub-image obtained through block partitioning is calculated according to a preset rule. The preset rule includes but is not limited to pixel value calculation, feature calculation, and the like.

As shown in FIG. 3, the first image is partitioned into a sub-image 1, a sub-image 2, a sub-image 3, a sub-image 4, another sub-image, and the like. Sizes of the sub-image 1 to the sub-image 3 are consistent, and the sub-image 4 is inconsistent with another sub-image in a plurality of sub-images.

In this embodiment, the encoding device adaptively selects different partitioning manners for different frames of images based on image texture information of the different frames of images, so that each sub-image obtained through partitioning matches an image texture. This helps improve encoding effect of image content included in the sub-image, and further improve image encoding accuracy.

S320: The encoding device 310 matches the plurality of sub-images with a buffered queue, to determine a first type of sub-images and a second type of sub-images.

In a feasible example, storage space of the queue is provided by a memory included in the encoding device.

In another feasible example, the storage space of the queue is provided by a storage device that communicates with the encoding device. In this case, the queue is also referred to as an external buffered queue in a video encoding process.

The memory and the storage device may include but are not limited to the following types of storage media: a dynamic random access memory (dynamic random access memory, DRAM) or a storage class memory (storage class memory, SCM). The DRAM is a semiconductor memory, and is a volatile memory (volatile memory) device like most random access memories (random access memories, RAMs). The SCM uses a composite storage technology that combines features of both a conventional storage apparatus and a memory. The storage class memory can provide a higher read/write speed than a hard disk, but has a lower access speed than the DRAM, and has lower costs than the DRAM. However, the DRAM and the SCM are merely examples for description in this embodiment. The memory may further include another random access memory, for example, a static random access memory (static random access memory, SRAM). Alternatively, the memory may be a solid-state storage particle, a mechanical hard disk, a magnetic tape disk, a memory, a cache, or the like. This is not limited in this application.

The queue includes feature values of one or more encoded sub-images, and an image to which the one or more encoded sub-images belong and the first image belong to a same stream (a video stream or another multimedia stream including an image).

For example, the encoded sub-image may be a sub-image included in a previous frame of image of the first image in the video stream.

For another example, the encoded sub-image may be a sub-image included in a next frame of image of the first image in the video stream.

Therefore, the feature values of the sub-images stored in the external buffered queue (or referred to as a queue) may be sub-images of several frames before the first image, or may be sub-images of an image after the first image, so that when the encoding device matches the sub-images of the first image with data stored in the queue, a range of image encoding data that can be used in reused sub-images is increased, and encoding bandwidth can be reduced by a larger extent.

The first type of sub-images determined in S320 matches a feature value of the encoded sub-image in the queue, and no feature value of the second type of sub-images is recorded in the queue.

In an optional implementation, the feature value of the encoded sub-image may include any one or a combination of: an image size, a location, an identification, and a matching status of the encoded sub-image, and the matching status indicates whether the encoded sub-image matches a to-be-encoded sub-image.

The image size of the encoded sub-image may be an enumeration of several fixed shape types, or may be a variable value of a length, a width, a height, or the like, or may be a sub-image size determined by using a method that can be used to obtain a size, for example, by specifying a rule for calculating a size (for example, a difference between lengths, widths, or heights of the encoded sub-image and a previous sub-image block).

The location of the encoded sub-image may be an absolute value of vertex coordinates of the encoded sub-image, or may be a location of an upper side, a lower side, a left side, or a right side, or a sub-image location determined by using a method that can be used to obtain a location, for example, by specifying a rule for calculating a location (for example, an offset value from a location of a previous sub-image).

An identification (identification, ID) value of the encoded sub-image may be a part of original pixel values of the encoded sub-image, or may be a value obtained by processing the part of the original pixel values in a reference manner. The value may uniquely represent the sub-image. The reference manner includes at least one of a hash algorithm and a cyclic redundancy check (Cyclic Redundancy Check, CRC) algorithm.

The matching status may be marked by using a specific identification, for example, 0 and 1 of binary classification values, where 0 indicates not matched, and 1 indicates matched; or 0 indicates matched, and 1 indicates not matched. Optionally, another possible status type character string may be used for marking. This is not limited in this application.

In this embodiment, the encoding device stores the feature values (for example, the foregoing image sizes, locations, identifications, and matching statuses) of the encoded sub-images into an independent queue, and distinguishes sub-images of a to-be-encoded image based on related information stored in the queue. In this way, the encoding device can reuse image encoding data of sub-images in a plurality of previous frames of images. This reduces a repeated encoding process of valid pixels in sub-images with same content, and helps reduce bandwidth for video encoding and improve encoding efficiency.

In addition, image encoding data of a complete encoded sub-image does not need to be stored in the queue, that is, when initial encoding data of the encoded sub-image is stored in a bitstream obtained through encoding, in comparison with image encoding data obtained by repeatedly encoding sub-images with same content, a small amount of data is occupied by the queue, and the encoding device needs to provide only small storage space to implement a related function of the queue. This helps reduce bandwidth for video encoding and improve encoding efficiency.

S330: The encoding device 310 generates first information of the first type of sub-images, and encodes the second type of sub-images to obtain second information.

For example, the plurality of sub-images obtained by the encoding device 310 by partitioning the first image are input into the encoder, and the encoder outputs the first information and the second information. The second information includes image encoding data obtained by encoding the second type of sub-images, and an encoding manner may be using a standard encoder or the like.

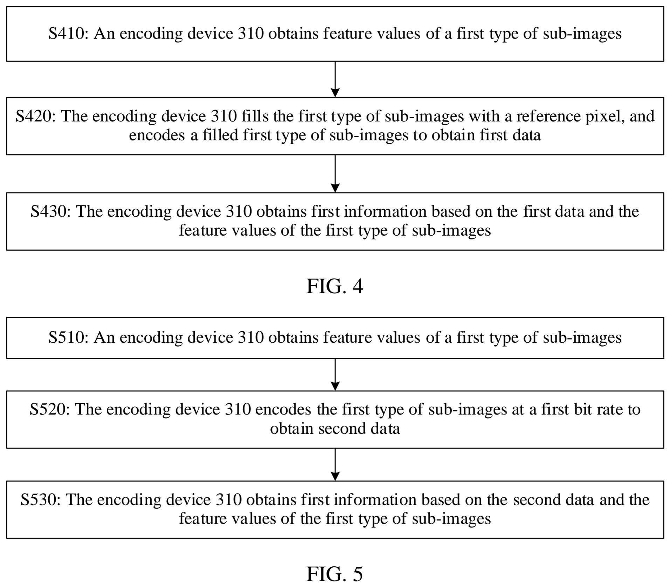

The first information indicates an encoded sub-image that matches the first type of sub-images in the queue. For an implementation in which the encoding device generates the first information, the following provides two feasible examples with reference to FIG. 4 and FIG. 5.

In a first feasible example, the encoding device obtains the first information of the first type of sub-images in a manner of block matching and pixel filling. FIG. 4 is a schematic flowchart 2 of an image encoding method according to this application. A process in which the encoding device 310 generates the first information of the first type of sub-images may include the following step S410 to step S430.

S410: The encoding device 310 obtains feature values of the first type of sub-images.

For example, the encoding device 310 may obtain the feature values through calculation based on pixel values included in the first type of sub-images.

For another example, the encoding device 310 may obtain the feature values through calculation based on image features of the first type of sub-images.

The foregoing two examples are merely optional implementations provided in this embodiment. The encoding device 310 may alternatively obtain the feature values through calculation based on other content of the first type of sub-images.

S420: The encoding device 310 fills the first type of sub-images with a reference pixel, and encodes a filled first type of sub-images to obtain first data.

A pixel filling manner may include but is not limited to a manner such as fixed-color filling or background-color filling. For example, the reference pixel may be a preset pixel value, for example, 0 or another specified value.

In this embodiment, an encoding manner used by the encoding device 310 for the filled first type of sub-images is consistent with an encoding manner used for the second type of sub-images, so that a case in which different areas in a reconstructed image are blurred because a plurality of different types of encoders are deployed in the encoding device 310 can be avoided. This helps improve image quality of image decoding.

S430: The encoding device 310 obtains the first information based on the first data and the feature values of the first type of sub-images.

For example, the first information includes image encoding data (the first data) and instruction information (the feature values) of the encoded and filled first type of sub-images. In a decoding process, the decoding device finds content of a decoded sub-image based on the instruction information, fill the content of the decoded sub-image into a corresponding location of the first type of sub-images.

In a second feasible example, the encoding device encodes the first type of sub-images in a low bit rate control manner, to obtain the first information. FIG. 5 is a schematic flowchart 3 of an image encoding method according to this application. A process in which the encoding device 310 generates the first information of the first type of sub-images may include the following step S510 to step S530.

S510: The encoding device 310 obtains feature values of the first type of sub-images.

For an implementation of S510, refer to related content of S410. Details are not described herein again.

S520: The encoding device 310 encodes the first type of sub-images at a first bit rate to obtain second data.

The first bit rate is less than or equal to a bit rate threshold.

For example, a bit rate control parameter is set for the sub-image according to a preset bit rate control rule. The preset bit rate control rule includes but is not limited to a manner such as block-level QP setting. If a large QP value (for example, QP=50) is set for the first type of sub-images, an amount of encoded data obtained by encoding the first type of sub-images by using the QP value is small. This helps reduce bandwidth for video encoding.

S530: The encoding device 310 obtains the first information based on the second data and the feature values of the first type of sub-images.

With reference to embodiments provided in FIG. 4 and FIG. 5, when same content repeatedly appears in different frames of images of a video, because image content matches an image texture, a to-be-encoded sub-image can more easily match a feature value of an encoded sub-image, and image encoding data of the encoded sub-image is further reused. Therefore, bandwidth for video encoding is reduced and encoding efficiency of video encoding is improved.

In addition, in an encoding process, regardless of whether the first type of sub-images is filled with the reference pixel or the large QP value is set for the first type of sub-images, a same encoder is used for a coding scheme of the first type of sub-images in a corresponding area in the first image and a coding scheme of the second type of sub-images. Therefore, the encoding device needs to provide only one general-purpose standard hardware video encoder (for example, a standard encoder that conforms to a video coding standard). In this way, a clear boundary between sub-images or a blurring problem at a boundary location due to encoding different sub-images by a plurality of encoders can be avoided.

Still refer to FIG. 3. The image encoding method provided in this embodiment further includes S340.

S340: The encoding device 310 outputs encoded data of the first image.

The encoded data of the first image includes the first information and the second information that are obtained in S330.

In a possible example, a manner in which the encoding device 310 outputs the encoded data may be sending the encoded data of the first image to another device. The another device may be a decoding device or a storage device configured to store the video stream to which the first image belongs. Further, the decoding device may reconstruct and restore an image based on the encoded data of the first image.

To improve image decoding efficiency on a decoder side, in an optional implementation, based on FIG. 3 to FIG. 5, the image encoding method provided in this embodiment further includes: The encoding device 310 sends the data stored in the queue. For example, the data stored in the queue may be packetized with a video stream obtained by encoding an image. A packetizing manner includes but is not limited to adding a specific field, splicing a parameter at a header or a tail of a bitstream, or the like. For example, the data stored in the queue is carried in a bitstream parameter set, a transport protocol header, an RTP payload, or a file format.

The bitstream parameter set may include but is not limited to a VPS, an SPS, a PPS, supplemental enhancement information (Supplemental Enhancement Information, SEI), and the like.

The transport protocol header may be an RTP extension header. For example, a type of an extension specified by the extension header is image instruction information (a feature value), and a corresponding value is the foregoing feature value.

The RTP payload identifies, by using an RTP version number or a character syntax information, that the RTP payload carries the image instruction information (the feature value).

The image instruction information (feature value) may further be offloaded into a file format (file format), for example, carried in a file format formulated in the standard ISO14496-12, or carried in a transport stream (MPEG-2 Transport Stream, MPEG2TS) file format. If the image instruction information is carried in the ISO14496-12, the image instruction information may be carried in a track header, or a corresponding box may be added, and image instruction information of each decoded frame is independently presented in the box. If the image instruction information is carried in the MPEG2TS file, the information may be set in adaptation_field_extension_flag in an adaptation field. OutLoopPicOrderflag is added to adaptation_field_extension_flag to mark that the image instruction information (the feature value) is used. outLoopPicParams includes the image instruction information. The decoder side may obtain the corresponding image instruction information (the feature value) based on the parameter, and a format is as follows:

```
          "adaptation_field() {
         adaptation_field_length
         if (adaptation_field_length > 0) {
         if (adaptation_field_extension_flag == '1 ') {
         if (OutLoopPicOrderflag == '1') {
         outLoopPicParams
          }
          }
          } }"
```

In a data communication process, in addition to transmitting encoded data obtained through encoding (for example, a bitstream), the encoding device further transmits data stored in an introduced queue, so that the decoding device can quickly reconstruct and restore an image based on the data stored in the queue. This improves decoding efficiency.

In addition, because an amount of the data stored in the queue is small, the data may be carried in one of the foregoing several optional manners, so that bandwidth required for communication between the encoding device and the decoding device is reduced. This helps improve communication efficiency of the coding system, and reduce bandwidth consumption.

In an optional implementation, in this embodiment, the buffered queue is further updated, to improve a matching hit rate of a sub-image of a subsequent frame in the video in the queue, and further reduce bandwidth for video encoding. For example, after the encoding device 310 determines the first type of sub-images and the second type of sub-images, the image encoding method according to this embodiment further includes: The encoding device 310 generates a feature value of each sub-image in the second type of sub-images, and writes the feature value of each sub-image in the second type of sub-images into the buffered queue.

In this way, the encoding device writes feature values of unmatched sub-images (the second type of sub-images) that are encoded for the first time into the queue, and when a next frame of image of the current encoded image in the video also has another sub-image that has same content as the unmatched sub-images, image encoding data of a sub-image whose feature value has been added to the queue may be reused in the another sub-image. This reduces encoding bandwidth of a plurality of frames of images in the video, and improves encoding efficiency.

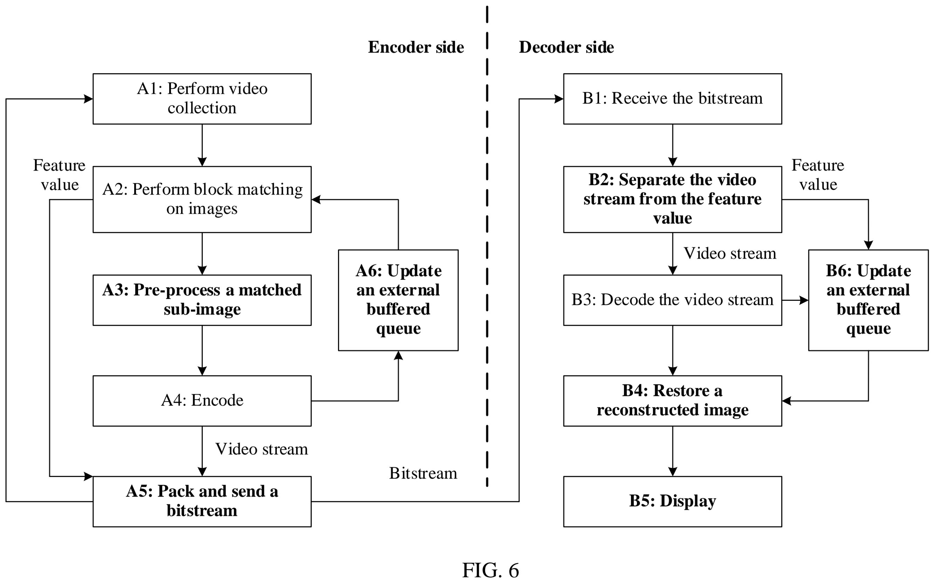

Based on FIG. 2, the following describes the image coding method according to this application as a whole with reference to content in FIG. 6. As shown in FIG. 3, FIG. 6 is a schematic flowchart of an image coding method according to this application. A method on an encoder side is performed by an encoding device, and method steps that need to be performed by the encoding device include A1 to A6. A method on a decoder side is performed by a decoding device, and method steps that need to be performed by the decoding device include B1 to B6. The following separately describes, by using examples, method steps that need to be performed on the encoder side and the decoder side.

A1: The encoding device captures a plurality of frames of images included in a video.

The video may be a video in a video conference scenario or another type of desktop content sharing (or referred to as screen content sharing) scenario.

A2: The encoding device partitions a to-be-encoded current frame of image to obtain a plurality of sub-images, performs block matching on the plurality of sub-images and an existing sub-image in an external buffered queue, and determines a matched sub-image and an unmatched sub-image in the current frame of image.

In addition, the encoding device further outputs image instruction information of segmentation and matching statuses of the plurality of sub-images, namely, the foregoing feature values, including: a location of each sub-image, an image size of the sub-image, an identification of the sub-image, whether the sub-image has a matched encoded sub-image in the external buffered queue, and the like. For a specific implementation of A2, refer to related descriptions of S310 and S320. Details are not described herein again.

A3: The encoding device pre-processes the matched sub-image (matched sub-image) in the current frame of image.

The pre-processing process includes at least one of filling a reference pixel or setting a low bit rate. For a specific implementation of A3, refer to related descriptions in embodiments provided in FIG. 4 and FIG. 5. Details are not described herein again.

A4: The encoding device inputs a pre-processed current frame of image into a general video encoder, and outputs an encoded video stream.

The encoded video stream includes image encoding data of the unmatched sub-image and image encoding data of a pre-processed matched sub-image.

A5: The encoding device packetizes the video stream output at A4 and the feature values output after block matching at A2, and sends a packetized bitstream to the decoder side.

A packetizing manner may include but is not limited to a manner of adding a specific field to the video stream output at A4, splicing a parameter to a header or a tail of the video stream, or the like. For a packetizing manner or a transmission location used for the feature value, refer to the descriptions in S340. Details are not described herein again.

It should be noted that the foregoing A2, A3, and A5 may be performed by a context-aware deduplication module included in the encoding device, for example, the context-aware deduplication module 215 provided in FIG. 2.

A6: The encoding device writes feature values of the unmatched sub-images into the external buffered queue, to update data stored in the external buffered queue.

Then, the decoder side performs the following B1 to B6 on the packetized bitstream sent at A5 on the encoder side.

B1: The decoding device receives the bitstream sent by the encoding device.

The bitstream includes encoded data of at least one frame of image and data (a feature value) stored in a queue used for image encoding. For the data stored in the queue, refer to related descriptions in S320. Details are not described herein again.

B2: The decoding device separates the bitstream to obtain the video stream and the feature value in the bitstream.

A separation manner is determined based on a location of the feature value in the bitstream. This is not limited in this application.

B3: The decoding device decodes the video stream to obtain the first image.

For example, the decoding device may decode the video stream by using a general-purpose standard decoder, to output the first image.

B4: The decoding device matches the data stored in the queue in the bitstream with the first image, and determines matched sub-images (the first type of sub-images) and an unmatched second type of sub-images in the first image. The decoding device finds, from the external buffered queue, a feature value of a decoded sub-image corresponding to the matched sub-images, determines image content of the decoded sub-image by using the feature value of the decoded sub-image, fills the image content of the decoded sub-image in an image area of the matched sub-images of the first image, and restores a reconstructed image of the first image.

The queue includes feature values of one or more decoded sub-images, an image to which the one or more decoded sub-images belong and the first image belong to a same stream (the video stream), the first type of sub-images match the feature value of the decoded sub-image in the queue, and no feature value of the second type of sub-images is recorded in the queue.

A difference between B4 and the encoder side lies in that a decoding process is a reverse process of the encoding process. Therefore, the feature value stored in the queue used in the matching process is the feature value of the decoded sub-image.

B5: The decoding device displays a restored reconstructed image. Before displaying the reconstructed image, the decoding device may further perform an image processing operation like rendering or cropping on the reconstructed image. This is not limited in this application.

Compared with a case in which image decoding data that is in an adjacent previous frame and that has a same location and same content as those in a current frame is reused for the current frame, in this application, the decoding device classifies sub-images of a first image based on feature values of the sub-images. Different sub-images have different feature values, and after matching the sub-images with decoded sub-images in a buffered queue, matched sub-images (for example, the first type of sub-images) and unmatched sub-images (for example, the second type of sub-images) may be determined. Therefore, image decoding data of a sub-image that is in a previous frame of image and that is the same as a matched sub-image in the to-be-decoded image can be reused only when the matched sub-image in the first image and the sub-image in the previous frame of image do not need to have a same location and same content.

Further, in the decoding process of the first image, decoding (for example, standard decoding) is performed on the unmatched sub-images, and information about matched decoded sub-images is reused for the matched sub-images. In this way, repeated decoding of valid pixels in the matched sub-images is avoided, decoding bandwidth for video decoding is reduced, and decoding efficiency is improved.

B6: The decoding device writes feature values of the unmatched sub-images into the external buffered queue, to update data stored in the external buffered queue.

Therefore, the decoding device writes feature values of unmatched sub-images that are decoded for the first time into the queue, and when a next frame of image of the image in the video also has another sub-image that has same content as the unmatched sub-images, image decoding data of a sub-image whose feature value has been added to the queue may also be reused in the another sub-image. This reduces decoding bandwidth of a plurality of frames of images in the video, and improves decoding efficiency.

It should be noted that a sub-image partitioning manner and a feature value generation manner used on the decoder side are consistent with those used on the encoder side. Details are not described herein again in this application. To make the image coding method according to this application clearer, the following separately uses two sub-image partitioning manners, namely, fixed block partitioning and adaptive partitioning (dynamic partitioning), as examples to describe the image coding method according to this application.

Example 1: An image is encoded and decoded in a fixed block partitioning manner.

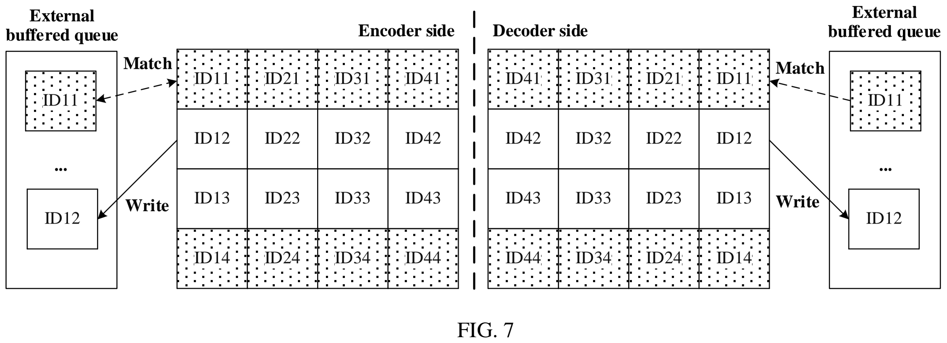

FIG. 7 is a diagram of an image coding method in a fixed block partitioning manner according to this application. The image coding method may be applied to the video transmission system shown in FIG. 1 or the video coding system shown in FIG. 2. The following separately describes method procedures on an encoder side and a decoder side.

On the encoder side, an encoding device partitions a to-be-encoded image into a plurality of sub-images of a fixed size, and marks each sub-image with a feature value (including an identification, an image size, a location, and the like), for example, ID11 to ID44 in FIG. 7.

In addition, the encoding device performs CADC block matching on the plurality of sub-images and an external buffered queue, to determine matched sub-images and unmatched sub-images, where the matched sub-images include ID11, ID21, ID31, ID41, ID14, ID24, ID34, and ID44 in FIG. 7, and the unmatched sub-images include ID12, ID22, ID32, ID42, ID13, ID23, ID33, and ID43 in FIG. 7.

Then, the encoding device outputs feature values of the matched sub-images, fills an area of the matched sub-images with a reference pixel, encodes a to-be-encoded image obtained through filling, and outputs a first bitstream. The first bitstream includes complete image encoding data of the unmatched sub-images and image encoding data obtained after reference pixel filling is performed on the matched sub-images.

Finally, the encoding device packetizes the feature values of the matched sub-images and the first bitstream for sending to a decoding device.

In addition, the encoding device further writes feature values of the unmatched sub-images into the external buffered queue, so that the image encoding data of these unmatched sub-images can be reused in a next frame of image. This reduces bandwidth for video encoding.

It should be noted that the encoding device may alternatively encode an image area of the unmatched sub-images at a low bit rate, to reduce an amount of data of the first bitstream.

A difference between the decoder side and the encoder side lies in that after identifying a sub-image that is in the first image and that has been matched with a decoded sub-image in the external buffered queue, the decoder device fills image content of the decoded sub-image into an image area of the matched sub-image. Information such as a size and a location of an image required in the filling process may be obtained from the external buffered queue.

Example 2: An image is encoded and decoded in an adaptive partitioning manner.

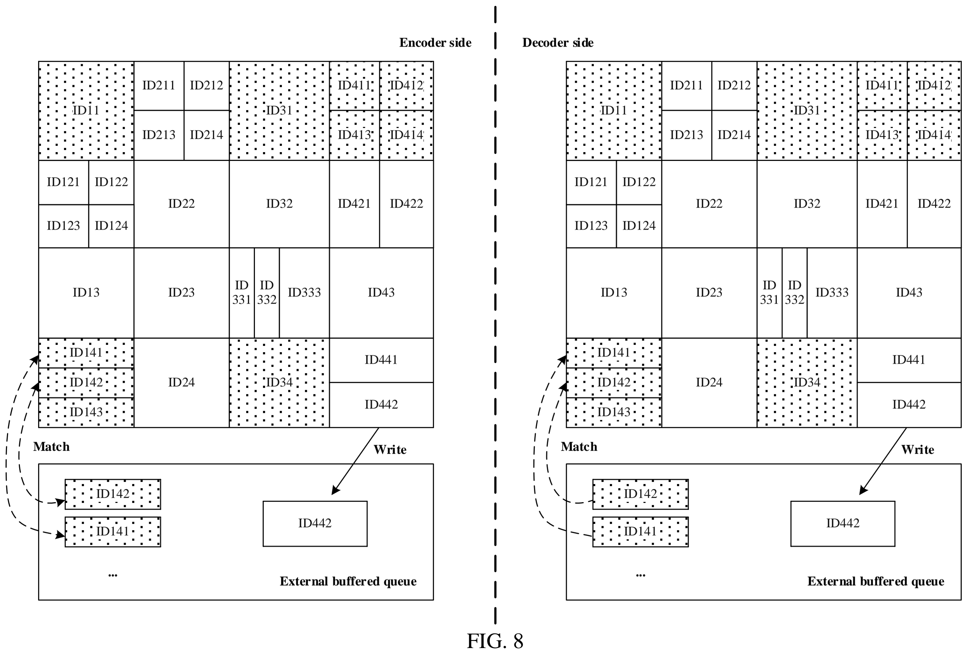

FIG. 8 is a diagram of an image coding method in an adaptive partitioning manner according to this application. The image coding method may be applied to the video transmission system shown in FIG. 1 or the video coding system shown in FIG. 2. A difference between FIG. 8 and FIG. 7 lies in that images obtained through partitioning in different image partitioning manners are different. For example, matched sub-images in FIG. 8 include ID11, ID31, ID411, ID412, ID413, ID414, ID141, ID142, ID143, and ID34, and other sub-images are unmatched sub-images. Other content is consistent with that in FIG. 7. Details are not described herein again in this application.

With reference to embodiments in FIG. 2 to FIG. 8, the image coding method according to this application may be applied to the following various coding scenarios: 1. fixed block partitioning + reference pixel filling + standard hardware video codec; 2. adaptive partitioning + reference pixel filling + standard hardware video codec; 3. fixed block partitioning + low-bit-rate encoding + standard hardware video codec; 4. adaptive partitioning + low-bit-rate encoding + standard hardware video codec; and the like.

Compared with coding method in screen content scenarios such as a video conference scenario and a desktop sharing scenario provided by common technologies, in the image coding method according to this application, repeated image matching is performed outside an encoder (an original image) on an encoder side, and a matching result (an image size, coordinates, an identification, a matching status, and the like) is established as an external buffered queue for sending to a decoder side in a form of an instruction. The decoder side creates an external buffered queue in the same manner, and traverses all image information of the entire frame. If the image is a matched image, the decoder side fills an image that is previously obtained through decoding and that is from the external buffered queue in a corresponding location. If the image is an unmatched image, the decoder side retains an original decoding result and updates the queue. Further, a compression rate of a general-purpose video encoder in a screen content scenario is increased, encoding bandwidth is reduced, and encoding efficiency is improved.

It should be noted that the image coding method according to this application may also be applied to screen content scenarios such as a cloud conference scenario, a cloud desktop scenario, a cloud game scenario, a live video scenario, and a desktop extension (Xtended, XR) scenario.

It may be understood that, to implement functions in the foregoing embodiments, a computing device includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

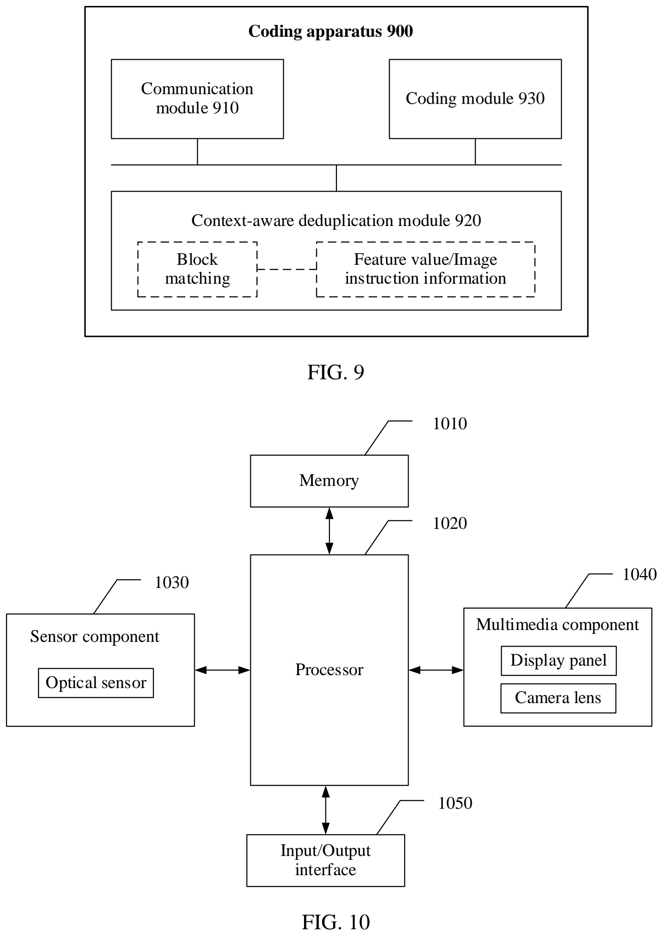

With reference to FIG. 1 to FIG. 8, the foregoing describes in detail the image coding method according to embodiments, and with reference to FIG. 9, the following describes a coding apparatus according to embodiments.

FIG. 9 is a diagram of a structure of a coding apparatus according to this application. The coding apparatus may be configured to implement functions of the encoding device and the decoding device in the foregoing method embodiments, and therefore can also achieve beneficial effect of the foregoing method embodiments. In this embodiment, the coding apparatus may be the encoding device 210 and the decoding device 220 shown in FIG. 2, or may be a module (for example, a chip) used in a computing device.

As shown in FIG. 9, the coding apparatus 900 includes a communication module 910, a context-aware deduplication module 920, and a coding module 930. The coding apparatus 900 is configured to implement functions of the encoding device and the decoding device in the method embodiments shown in the accompanying drawings.

When the coding apparatus 900 is configured to implement functions of the encoding device, specific functions of the modules are as follows:
The communication module 910 is configured to obtain a to-be-encoded first image in a video.

The context-aware deduplication module 920 is configured to: partition the first image to obtain a plurality of sub-images, and perform block matching on the plurality of sub-images and a feature value (image instruction information) in a queue, to determine a first type of sub-images and a second type of sub-images.

The coding module 930 is configured to: generate first information of the first type of sub-images, and encode the second type of sub-images to obtain second information.

The communication module 910 is further configured to output encoded data including the first information and the second information.

When the coding apparatus 900 is configured to implement functions of the decoding device, specific functions of the modules are as follows:
The communication module 910 is configured to obtain a bitstream, where the bitstream includes encoded data of at least one frame of image and data (a feature value) stored in a queue used for image encoding.

The context-aware deduplication module 920 is configured to: separate data in the bitstream to obtain a video stream and the feature value; and after the first image obtained by the coding module 930 by decoding the video stream is partitioned to obtain a plurality of sub-images, perform block matching on the plurality of sub-images and the feature value (image instruction information) in the queue, to determine a first type of sub-images and a second type of sub-images. In addition, the context-aware deduplication module 920 fills image content of a decoded sub-image in the queue into an image area corresponding to the first type of sub-images, to restore a reconstructed image of a first image.

It should be understood that the coding apparatus 900 in this embodiment of this application may be implemented through an application-specific integrated circuit (application-specific integrated circuit, ASIC) or a programmable logic device (programmable logic device, PLD). The PLD may be a complex programmable logic device (complex programmable logical device, CPLD), a field-programmable gate array (field-programmable gate array, FPGA), generic array logic (generic array logic, GAL), or any combination thereof. Alternatively, when the method shown in FIG. 3 may be implemented by software, the modules of the coding apparatus may be software modules, and the modules of the coding apparatus 900 may be software modules.

The coding apparatus 900 according to this embodiment of this application may correspondingly perform the methods described in embodiments of this application. In addition, the foregoing and other operations and/or functions of the units in the coding apparatus 900 are respectively used to implement corresponding procedures of the methods in the foregoing accompanying drawings. For brevity, details are not described herein again.

FIG. 10 is a diagram of a structure of an image processing system according to this application. The image processing system is described by using a mobile phone as an example. The mobile phone or a chip system built in the mobile phone includes a memory 1010, a processor 1020, a sensor component 1030, a multimedia component 1040, and an input/output interface 1050. With reference to FIG. 10, the following describes in detail each component of the mobile phone or the chip system built in the mobile phone.

The memory 1010 may be configured to store data, a software program, and a module, and mainly includes a program storage area and a data storage area. The program storage area may store a software program that includes instructions formed by code, including but not limited to an operating system and an application program required by at least one function, such as a sound playing function or an image playing function. The data storage area may store data created based on use of the mobile phone, for example, audio data, image data, and a phone book. In this embodiment of this application, the memory 1010 may be configured to store a number of bits of data in a bitstream buffer. In some feasible embodiments, there may be one or more memories. The memory may include a floppy disk, a hard disk like a built-in hard disk and a removable hard disk, a magnetic disk, a compact disc, a magnetooptical disk like a CD_ROM or a DCD ROM, a nonvolatile storage device like a RAM, a ROM, a PROM, an EPROM, an EEPROM, or a flash memory, or any other form of storage medium well-known in the art.

The processor 1020 is a control center of the mobile phone, is connected to each part of the entire device through various interfaces and lines, and by running or executing the software program and/or the software module that are/is stored in the memory 1010 and by invoking data stored in the memory 1010, performs various functions of the mobile phone and processes data, to perform overall monitoring on the mobile phone. In this embodiment of this application, the processor 1020 may be configured to perform one or more steps in the method embodiments of this application. For example, the processor 1020 may be configured to perform one or more steps in S420 to S470 in the following method embodiments. In some feasible embodiments, the processor 1020 may be a single-processor structure, a multi-processor structure, a single-thread processor, a multi-thread processor, or the like. In some feasible embodiments, the processor 1020 may include at least one of a central processing unit, a general-purpose processor, a digital signal processor, a neural network processor, an image processing unit, an image signal processor, a microcontroller, a microprocessor, or the like. In addition, the processor 1020 may further include another hardware circuit or an accelerator, for example, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. The processor 1020 may alternatively be a combination for implementing a computing function, for example, a combination including one or more microprocessors, or a combination of a digital signal processor and a microprocessor.

The sensor component 1030 includes one or more sensors, and is configured to provide status evaluation in various aspects for the mobile phone. The sensor component 1030 may include an optical sensor, for example, a CMOS or CCD image sensor, for use in an imaging application, that is, become a component of a camera or a camera lens. In embodiments of this application, the sensor component 1030 may be configured to support a camera lens in the multimedia component 1040 in obtaining an image and the like. In addition, the sensor component 1030 may further include an acceleration sensor, a gyroscope sensor, a magnetic sensor, a pressure sensor, or a temperature sensor. The sensor component 1030 may detect acceleration/deceleration, an orientation, and an on/off state of the mobile phone, a relative location of the component, a temperature change of the mobile phone, or the like.

The multimedia component 1040 provides a screen of an output interface between the mobile phone and a user. The screen may be a touch panel, and when the screen is a touch panel, the screen may be implemented as a touchscreen, to receive an input signal from the user. The touch panel includes one or more touch sensors to sense touches, sliding, and gestures on the touch panel. The touch sensor may sense a boundary of a touch or slide act, and may detect duration and a pressure that are associated with the touch or slide operation. In addition, the multimedia component 1040 further includes at least one camera lens. For example, the multimedia component 1040 includes a front-facing camera lens and/or a rear-facing camera lens. When the mobile phone is in an operating mode, for example, an image shooting mode or a video shooting mode, the front-facing camera lens and/or the rear-facing camera lens may sense an external multimedia signal, and the signal is used to form an image frame. The front-facing camera lens and the rear-facing camera lens each may be a fixed optical lens system or have a focal length and an optical zooming capability.

The input/output interface 1050 provides an interface between the processor 1020 and a peripheral interface module. For example, the peripheral interface module may include a keyboard, a mouse, or a USB (universal serial bus) device. In a possible implementation, the input/output interface 1050 may have only one input/output interface, or may have a plurality of input/output interfaces.

Although not shown, the mobile phone may further include an audio component, a communication component, and the like. For example, the audio component includes a microphone, and the communication component includes a wireless fidelity (wireless fidelity, Wi-Fi) module, a Bluetooth module, and the like. Details are not described herein in embodiments of this application.

The foregoing image processing system may be a general-purpose device or a dedicated device. For example, the image processing system may be an edge device (for example, a box carrying a chip having a processing capability). Optionally, the image processing system may alternatively be a server or another device having a computing capability. In some possible cases, the image processing system may alternatively be the foregoing video coding system or the like.

It should be understood that the image processing system according to embodiments may correspond to the coding apparatus 900 in embodiments, and may correspond to a corresponding entity that performs any method in the foregoing accompanying drawings. In addition, the foregoing and other operations and/or functions of the modules in the coding apparatus 900 are respectively used to implement corresponding procedures of the methods in the foregoing accompanying drawings. For brevity, details are not described herein again.

The method steps in embodiments may be implemented in a hardware manner, or may be implemented by executing software instructions by a processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a computing device. Certainly, the processor and the storage medium may alternatively exist in a network device or a terminal device as discrete components.

This application further provides a chip system. The chip system includes a processor, configured to implement a function of a data processing unit in the foregoing method. In a possible design, the chip system further includes a memory, configured to store program instructions and/or data. The chip system may include a chip, or may include a chip and another discrete component.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device like a server or a data center, integrating one or more usable media. The usable medium may be a magnetic medium like a floppy disk, a hard disk, or a magnetic tape, may be an optical medium like a digital video disc (digital video disc, DVD), or may be a semiconductor medium like a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An image encoding method, wherein the method comprises:
obtaining a first image, wherein the first image comprises a first type of sub-images and/or a second type of sub-images, a size of each sub-image of the first type of sub-images and/or the second type of sub-images is related to a matching status of a feature value of an encoded sub-image, and an image to which the encoded sub-image belongs and the first image belong to a same image sequence, wherein
feature values of the first type of sub-images match the feature value of the encoded sub-image, and feature values of the second type of sub-images do not match the feature value of the encoded sub-image;
updating original pixel values of the first type of sub-images; and
encoding an updated first type of sub-images and the second type of sub-images, to obtain a bitstream.

2. The method according to claim **1,** wherein the feature value of the encoded sub-image comprises any one or a combination of: an image size, a location, an identification, and a matching status of the encoded sub-image, and the matching status indicates whether the encoded sub-image matches a to-be-encoded sub-image.

3. The method according to claim 2, wherein the identification of the encoded sub-image is a part of original pixel values of the encoded sub-image or a value obtained through processing the part of the original pixel values in a reference manner, and the reference manner comprises at least one of a hash algorithm and a cyclic redundancy check algorithm.

4. The method according to any one of claims 1 to 3, wherein updating the original pixel values of the first type of sub-images comprises:
filling the first type of sub-images with a reference pixel, to obtain a filled first type of sub-images; and
encoding the updated first type of sub-images and the second type of sub-images to obtain the bitstream comprises:
encoding the filled first type of sub-images to obtain first information, wherein the first information comprises a feature value of the first type of sub-images;
encoding the second type of sub-images to obtain second information; and
obtaining the bitstream based on the first information and the second information.

5. The method according to claim 4, wherein the first information further comprises second data obtained by encoding the first type of sub-images at a first bit rate, and the first bit rate is less than or equal to a bit rate threshold.

6. The method according to any one of claims 1 to 5, wherein the first image comprises the second type of sub-images, and after obtaining the first image, the method further comprises:
obtaining a feature value of each sub-image of the second type of sub-images; and
buffering the feature value of each sub-image of the second type of sub-images.

7. The method according to claim 6, wherein the method further comprises:
sending the buffered feature value of each sub-image of the second type of sub-images, wherein the feature value of each sub-image of the second type of sub-images is carried in any one of the following: a bitstream parameter set, a transport protocol header, a real-time transport protocol RTP payload, or a file format.

8. The method according to any one of claims 1 to 7, wherein the first type of sub-images and the second type of sub-images are consistent in image size.

9. The method according to any one of claims 1 to 8, wherein the size of each sub-image is determined based on image texture information of the first image.

10. The method according to any one of claims 1 to 9, wherein after obtaining the bitstream, the method further comprises:
sending the bitstream.

11. An image decoding method, wherein the method comprises:
obtaining a bitstream, wherein the bitstream comprises a bitstream of at least one frame of image;
obtaining a first image based on the bitstream, wherein the first image comprises a first type of sub-images and/or a second type of sub-images, a size of each sub-image of the first type of sub-images and/or the second type of sub-images is related to a matching status of a feature value of a decoded sub-image, and an image to which the decoded sub-image belongs and the first image belong to a same image sequence, wherein
feature values of the first type of sub-images match the feature value of the decoded sub-image, and feature values of the second type of sub-images do not match the feature value of the decoded sub-image; and
restoring, based on the feature value of the decoded sub-image, an image area corresponding to the first type of sub-images in the first image, to obtain a reconstructed image.

12. The method according to claim 11, wherein the feature value of the decoded sub-image comprises any one or a combination of: an image size, a location, an identification, and a matching status of the decoded sub-image, and the matching status indicates whether the decoded sub-image matches a to-be-decoded sub-image.

13. The method according to claim 12, wherein the identification of the decoded sub-image is a part of original pixel values of the decoded sub-image or a value obtained through processing the part of the original pixel values in a reference manner, and the reference manner comprises at least one of a hash algorithm and a cyclic redundancy check algorithm.

14. The method according to any one of claims 11 to 13, wherein the first type of sub-images and the second type of sub-images are consistent in image size.

15. The method according to any one of claims 11 to 14, wherein the bitstream further comprises a feature value of each sub-image of the second type of sub-images, and the feature value of each sub-image of the second type of sub-images is carried in any one of the following: a bitstream parameter set, a transport protocol header, a real-time transport protocol RTP payload, or a file format.

16. A coding apparatus, wherein the coding apparatus is configured to perform the method according to any one of claims 1 to 15.

17. An encoding device, wherein the encoding device comprises at least one processor and a memory, and the memory is configured to store a computer program, so that when the computer program is executed by the at least one processor, the method according to any one of claims 1 to 10 is implemented.

18. A decoding device, wherein the decoding device comprises at least one processor and a memory, and the memory is configured to store a computer program, so that when the computer program is executed by the at least one processor, the method according to any one of claims 11 to 15 is implemented.

19. A coding system, wherein the coding system comprises the encoding device according to claim 17 and the decoding device according to claim 18, the encoding device is configured to perform operation steps of the method according to any one of claims 1 to 10, and the decoding device is configured to perform operation steps of the method according to any one of claims 11 to 15.

20. A computer-readable storage medium, wherein the computer-readable storage medium stores computer software instructions, and when the computer software instructions are run on a computer, the computer performs the method according to any one of claims 1 to 15.
